# FASCICULE DE BREVET EUROPEEN

(11) **EP 2 943 598 B1**
(45) Date de publication et mention de la délivrance du brevet: **21.06.2017**
(21) Numéro de dépôt: 14700190.3
(22) Date de dépôt: 09.01.2014
(51) Int. Cl.: C22C 32/00, C22C 1/05, C04B 14/32

(54) **PROCÉDÉ D'ÉLABORATION D'UN MATÉRIAU NANOCOMPOSITE AL-TIC**
VERFAHREN ZUR HERSTELLUNG EINES AL-TIC-NANOKOMPOSITMATERIALS
METHOD FOR PRODUCING AN AL-TIC NANOCOMPOSITE MATERIA

(30) Priorité: 11.01.2013 FR 1350249
(43) Date de publication de la demande: 18.11.2015
(73) Titulaire: Commissariat à l'Énergie Atomique et aux Énergies Alternatives, 75015 Paris (FR)
(72) Inventeur: CHAFFRON, Laurent, F-91360 Villemoisson sur Orge (FR); NUNES, Daniel, F-91400 Saclay (FR)
(74) Mandataire: Brevalex
(86) Numéro de dépôt international: PCT/EP2014/050322
(87) Numéro de publication internationale: WO 2014/108470

(56) Documents cités:
- YUCEL BIROL: "Response to thermal exposure of the mechanically alloyed Al-Ti/C powders", JOURNAL OF MATERIALS SCIENCE, KLUWER ACADEMIC PUBLISHERS, BO, vol. 42, no. 13, 26 avril 2007 (2007-04-26), pages 5123-5128, XP019503085, ISSN: 1573-4803, DOI: 10.1007/S10853-006-1263-5
- B. Dikici ET AL: "Synthesis of in situ TiC nanoparticles in liquid aluminum: the effect of sintering temperature", journal of composite materials, 6 janvier 2011 (2011-01-06), pages 895-900, XP055080196, Extrait de l'Internet: URL:http://jcm.sagepub.com/content/45/8/89 5.abstract [extrait le 2013-09-19]
- J.C. Viala ET AL: "Diffusion paths and reaction mechanisms in the high-temperature chemical interaction between carbon and titanium aluminides", Materials Science and Engineering A, 15 novembre 1995 (1995-11-15), pages 222-237, XP055080197, Extrait de l'Internet: URL:http://ac.els-cdn.com/0921509395098828 /1-s2.0-0921509395098828-main.pdf?_tid=b4b 10d2c-215a-11e3-9bd7-00000aab0f26&acdnat=1 379616101_a3ec43e2b6e0aa9a2673445f2fa526f9 [extrait le 2013-09-19]
- C. SURYANARAYANA ET AL: "Mechanically alloyed nanocomposites", PROGRESS IN MATERIALS SCIENCE, vol. 58, no. 4, 13 octobre 2012 (2012-10-13), pages 383-502, XP055079434, ISSN: 0079-6425, DOI: 10.1016/j.pmatsci.2012.10.001

## Description

### DOMAINE TECHNIQUE

La présente invention a trait à un procédé d'élaboration d'un matériau nanocomposite Al/TiC, à savoir un matériau comprenant une matrice en aluminium dans laquelle sont dispersés des renforts de TiC de tailles nanométriques.

Ce procédé peut notamment trouver application dans les domaines de l'aéronautique et de l'automobile.

### ÉTAT DE LA TECHNIQUE ANTÉRIEURE

Dans le domaine de l'automobile et de l'aéronautique, les industriels cherchent à obtenir des matériaux légers et résistants. Or, la plupart des matériaux industrialisables légers sont très peu résistants.

C'est la raison pour laquelle les matériaux à matrice métallique (CMM), qui comprennent une matrice métallique (métal ou alliage métallique) dans laquelle sont incorporés des renforts (particules, fibres ou autres) métalliques ou céramiques, sont particulièrement appréciés. En effet, l'intérêt des CMM par rapport aux alliages légers (à base d'aluminium, de magnésium ou de titane) est qu'ils présentent des rapports E/p (module élastique/masse volumique) et σ/ρ (limite d'élasticité/masse volumique) très élevés.

Parmi les matériaux CMM ayant une matrice en alliage léger, les composites Al/TiC, qui sont des alliages d'aluminium renforcés par des particules de carbure de titane, sont des matériaux particulièrement intéressants, car ils combinent la ductilité, la conductivité électrique et thermique de la matrice d'aluminium, avec la résistance mécanique, la rigidité et la dureté du carbure de titane. Cette combinaison de propriétés rend les composites Al/TiC particulièrement attractifs pour une utilisation dans l'automobile ou l'aéronautique, car outre leurs propriétés mécaniques, ils permettent également une économie de poids intéressante.

Les composites Al/TiC suscitent également beaucoup d'intérêt du fait de la bonne stabilité thermochimique du carbure de titane, qui rend possible une fabrication in situ de ces composites par des méthodes de solidification depuis l'état liquide à partir des trois éléments constitutifs Al, Ti, C. Cependant, la réalisation des composites Al/TiC n'est pas aussi simple.

En effet, les matériaux CMM qui sont obtenus par solidification (brassage, infiltration...) ou par soudage diffusion présentent des contraintes d'élaboration (problèmes de mouillabilité des renforts par le métal en fusion, difficultés d'obtention d'une distribution homogène des renforts, apparition de réactions parasites à l'interface renfort/métal en fusion), ce qui a pour effet de détériorer les propriétés mécaniques des matériaux CMM ainsi réalisés.

Dans le cas d'un composite Al/TiC, de nombreuses réactions interviennent et jusqu'à trois composés différents (Al₃Ti, Al₄C₃ et TiC) peuvent coexister durant la fabrication in situ du composite. Or, les occurrences et les amplitudes de ces réactions dépendent non seulement de la nature des constituants de départ et de la température à laquelle est réalisée la réaction, mais aussi de la teneur en carbone du carbure de titane formé. La fabrication d'un tel composite est donc délicate.

A titre d'exemple, Nukami et Flemings décrivent dans le document **[1]** la synthèse in situ de composites à matrice aluminium renforcée par des particules de TiC par solidification. Plus particulièrement, le composite est obtenu en procédant à l'infiltration d'une préforme Al-Ti-C, obtenue en compactant des poudres de Al, Ti, C, par de l'aluminium en fusion. Nukami et Flemings ont ainsi constaté l'apparition de plusieurs réactions durant la synthèse du composite, à savoir :

Ti₍ₛ₎+ 3Al₍ₛ₎ → Al₃Ti₍ₛ₎ (1)

Al₍ₛ₎ → Al₍ₗ₎ (2)

Ti₍ₛ₎+3Al₍ₗ₎ →Al₃Ti₍ₛ₎ (3)

3 Al₃Ti₍ₛ₎+Al₄C₃₍ₛ₎ → 3 TiC₍ₛ₎+13 Al₍ₗ₎ (4)

Al₃Ti₍ₛ₎+ C₍ₛ₎ → TiC₍ₛ₎+ 3 Al₍ₗ₎ (5)

Le composite Al/TiC peut donc être élaboré de différentes façons selon différents chemins réactionnels, ce qui a pour conséquence qu'il est difficile de contrôler la composition chimique et la microstructure du composite ainsi obtenu.

Une autre manière de procéder pour obtenir un composite Al/TiC consiste à broyer les trois éléments constitutifs de base, Al, Ti, C. Le principal avantage de cette solution est qu'elle permet de maitriser la composition du composite, mais l'inconvénient majeur est qu'en partant de composés plus ou moins ductiles, on risque, outre le collage des poudres, d'engendrer des inhomogénéités de composition au sein du composite obtenu.

Enfin, on peut envisager de synthétiser un composite Al/TiC en dispersant des particules de TiC de taille micrométrique dans l'aluminium, par exemple en co-broyant par cryobroyage de l'aluminium avec des particules de TiC de taille micrométrique. Or, si les propriétés mécaniques (résistance à rupture, module d'Young, tenue en fatigue) du composite Al/TiC ainsi obtenu sont effectivement améliorées, cela se fait au détriment de la facilité d'usinage des matériaux, voire de leur qualité de surface, à cause de la taille des particules de renforts utilisées qui provoquent une usure accélérée des outils de coupe et des arrachements de matière.

Des exemples de procédés de formation d'un composite Al/TiC sont décrits dans les document **[2]** et **[3].** Le document **[4],** quant à lui, décrit les résultats d'une étude expérimentale réalisée afin de caractériser les phases formées entre le graphite et un aluminure de titane.

Pour remédier à ce problème de la rugosité de surface, il a été proposé de diminuer la taille des renforts et d'utiliser des particules de taille submicrométrique (c'est-à-dire inférieure à 1 µm et supérieure à 100 nm), voire nanométrique. On a cependant constaté que, pour les composites résultant de l'incorporation de particules de taille nanométrique (ces composites étant appelés NCMM, le N signifiant « nano », ou nanocomposites), les propriétés mécaniques attendues ne sont pas atteintes en ce qui concerne l'allongement à rupture. En effet, on obtient, dans le cas d'un Al/SiC par exemple, des valeurs d'allongement à rupture autour de 0,3%, alors que la valeur basse d'allongement à rupture minimale requise pour l'utilisation d'un matériau CMM est de 3%. La cause de ces mauvais résultats est vraisemblablement liée à l'introduction d'impuretés dans le composite, du fait de l'utilisation de poudres nanométriques qui sont, par nature, extrêmement réactives. Or, ces impuretés peuvent donner naissance à des phases secondaires, qui sont localisées aux joints de grains et qui conduisent à un affaiblissement du comportement mécanique du composite.

Au regard des inconvénients susmentionnés, les inventeurs se sont fixé pour objectif de mettre en place un procédé de fabrication d'un matériau NCMM Al/TiC à très fine dispersion de carbure de titane, qui permette non seulement de renforcer la matrice d'aluminium, mais également de garantir une très faible rugosité de surface.

### EXPOSÉ DE L'INVENTION

Pour ce faire, les inventeurs ont mis en place un procédé de préparation d'un matériau nanocomposite Al/TiC comprenant une matrice en aluminium dans laquelle sont dispersées des particules comprenant du TiC et ayant une taille nanométrique, ledit procédé comprenant les étapes suivantes :
a) la préparation d'un premier mélange de poudres par mise en contact d'une poudre de graphite et d'une poudre d'aluminure de titane de formule Al₃Ti, les deux poudres ayant des particules de taille micrométrique ou supérieure ;
b) la préparation d'un deuxième mélange de poudres par mécano-synthèse du premier mélange de poudres, le deuxième mélange de poudres étant formé en tout ou partie de particules comprenant à la fois de l'aluminure de titane et du graphite ;
c) la compression du deuxième mélange de poudres pour obtenir un ou des comprimés ;
d) le frittage réactif du ou des comprimés, moyennant quoi on obtient le matériau nanocomposite Al/TiC.

Dans le cadre de la présente invention, on entend par « nanocomposite » un composite présentant au moins deux phases et au moins l'une de ces phases a au moins l'une de ses dimensions qui est nanométrique. Dans le cas présent, ce sont les renforts (les particules de TiC) qui ont une taille nanométrique.

Dans ce qui précède et ce qui suit, le terme « taille », appliqué à des particules ou à des cristallites, désigne la plus grande dimension de ces grains ou de ces cristallites. Le terme « nanométrique » signifie supérieur ou égal à 1 nm et inférieur ou égal à 100 nanomètres. Le terme « micrométrique » signifie supérieur ou égal à 1 micromètre et inférieur à 1000 micromètres.

On rappelle par ailleurs que le terme « particules » désigne des éléments dont le rapport de la plus grande dimension sur la plus petite dimension est inférieur ou égal à 2. Les particules peuvent donc être sphériques ou quasi-sphériques, cubiques ou quasi-cubiques, rhomboédrique ou quasi-rhomboédrique...

Le procédé objet de l'invention selon la revendication 1 repose sur la combinaison de deux techniques complémentaires qui ne nécessitent aucune matière première de taille nanométrique pour la réalisation d'un matériau nanocomposite comprenant une matrice d'aluminium renforcée par des particules de carbure de titane (TiC) de taille nanométrique.

La première technique est une mécano-synthèse (également connue sous le terme de broyage mécanique à haute énergie ou « mechanical alloying » en anglais) dont le rôle est double : il s'agit, d'une part, d'homogénéiser à l'échelle la plus fine possible les précurseurs, Al₃Ti et C, en vue de favoriser la formation complète du composite Al/TiC par un traitement thermique ultérieur (frittage réactif) et, d'autre part, de minimiser la quantité de TiC formée au cours du broyage, la présence de grains de TiC, très durs et très abrasifs, entraînant une contamination inéluctable de la poudre par des éléments provenant du dispositif de broyage (par exemple, arrachement de particules d'acier de l'enceinte de broyage).

Pour rappel, la technique de la mécano-synthèse consiste en un broyage, dans un dispositif du type broyeur ou attriteur, de poudres de taille micrométrique ou supérieure d'un composé A (ici, le graphite) et d'un composé B (l'aluminure de titane Al₃Ti) pendant un temps suffisant (souvent de plusieurs heures) pour essayer d'obtenir une poudre intimement mélangée présentant une phase A et une phase B. En fait, au cours du broyage, il y a une alternance de déformations plastiques, de fractures et de collages, qui font que les poudres initiales A et B peuvent conserver leur composition initiale, voire constituer un composé C à l'issue du broyage (on parle alors de mécanosynthèse réactive).

A l'issue de l'étape b), on obtient donc un deuxième mélange de poudres dont tout ou partie des particules sont formées d'une phase de graphite et d'une phase d'aluminure de graphite Al₃Ti (il y a coexistence de ces deux phases au sein d'une même particule). De préférence, au sein des particules, ces deux phases sont intimement mélangées et la répartition de ces deux phases est homogène à l'échelle la plus fine possible.

La seconde technique est un frittage réactif qui a pour but, d'une part, de former le matériau composite souhaité et, d'autre part, de densifier au maximum le matériau obtenu.

En ce qui concerne l'étape b) de préparation du deuxième mélange, la mécano-synthèse peut être réalisée selon des conditions particulières.

La mécano-synthèse peut être réalisée pendant une durée comprise entre 24 et 48 heures et cette durée est de préférence égale à 36 heures.

La mécano-synthèse peut être réalisée dans une enceinte d'un dispositif de broyage, ladite enceinte n'étant pas refroidie au cours de la mécano-synthèse. En fait, au cours du broyage, les chocs répétés entre les particules entre elles ou contre la paroi de l'enceinte produisent de la chaleur. Si l'enceinte n'est pas refroidie, la mécano-synthèse est donc réalisée à une température supérieure à la température ambiante et peut par exemple atteindre une température de 80°C.

La mécano-synthèse peut être réalisée dans une enceinte d'un dispositif de broyage, cette enceinte étant munie d'un rotor qui, au cours de la mécano-synthèse, effectue des cycles de broyage et désagglomération successifs, le rotor tournant, à chaque cycle, à une première vitesse durant une première durée au cours de la phase de broyage dudit cycle et à une deuxième vitesse durant une deuxième vitesse au cours de la phase de désagglomération dudit cycle, la première vitesse étant d'au moins de 200 tr/min plus rapide que la deuxième vitesse et la première durée étant au moins deux fois plus longue que la deuxième durée. La première vitesse peut être comprise entre 1400 et 800 tr/min et la deuxième vitesse comprise entre 1000 et 400 tr/min. La première durée peut être comprise entre 1 et 5 minutes et la deuxième durée comprise entre 20 secondes et 3 minutes.

La mécano-synthèse peut être réalisée dans une enceinte d'un dispositif de broyage, ladite enceinte étant remplie entre 15 et 30% de son volume, de préférence à 25%.

Selon une variante possible de l'invention, lorsque l'enceinte du dispositif de broyage comporte des billes de broyage, le rapport du volume du premier mélange de poudres sur le volume des billes de broyage est de préférence compris entre 5 et 12%.

De préférence, le deuxième mélange de poudres comprend au plus 35% en poids de TiC.

En ce qui concerne l'étape c) de compression du deuxième mélange, il peut par exemple s'agir d'un pastillage pour obtenir une ou plusieurs pastilles. Quoi qu'il en soit, la compression du deuxième mélange peut comprendre le placement du deuxième mélange dans un moule de forme adaptée pour former un ou plusieurs comprimés et l'application d'un pressage uniaxial ou d'un pressage isostatique à froid au contenu dudit moule.

En ce qui concerne l'étape d) de frittage, il peut être réalisé à une température comprise entre 900°C et 1400°C.

Il peut être réalisé pendant une durée comprise entre 1 et 15 minutes. Il est bien entendu que la durée du frittage s'entend comme la durée à compter du moment où la température de frittage est atteinte.

La température de frittage peut être atteinte en chauffant le ou les comprimés à une vitesse comprise entre 100°C/min et 400°C/min. Cette vitesse de chauffe est de préférence d'au moins 300°C/min. Une vitesse de chauffe rapide permet de limiter le grossissement des grains (cristallites), tout en conservant la densification du matériau. On précise que la vitesse de refroidissement est de préférence identique ou sensiblement identique (à plus ou moins 5%) à la vitesse de chauffe.

De préférence, le frittage est réalisé à une température de 1000°C et pendant une durée comprise entre 1 et 5 minutes, la température de frittage étant atteinte en chauffant le ou les comprimées à une vitesse de 300°C/min.

De préférence, le procédé selon l'invention comprend en outre, après l'étape b) et avant l'étape c), une étape de tamisage du deuxième mélange de poudres, pour sélectionner les particules ayant une taille comprise entre 50 et 200 micromètres.

Les matériaux obtenus selon le procédé objet de l'invention présentent de nombreux avantages.

Le procédé selon l'invention permet d'obtenir des nanocomposites ayant un allongement à rupture proche de 7%, bien meilleur que celui obtenu par les nanocomposites de l'art antérieur obtenu en introduisant une phase dispersée de carbure de taille micrométrique dans de l'aluminium, qui peinent à atteindre la valeur basse d'allongement à rupture requise pour l'utilisation des CMM, qui est de 3%.

D'autre part, le procédé selon l'invention présente l'avantage de ne pas utiliser de poudres nanométriques lors de la fabrication du NCMM, ce qui est un atout majeur vis-à-vis des contraintes drastiques d'utilisation de matériaux nanométriques dans l'industrie (dissémination, pyrophoricité...). Dans le procédé proposé, les produits de départ sont de taille micrométrique ou supérieure (de préférence de taille micrométrique, mais supérieure à 100 µm). La nanostructuration se produit in situ pendant le traitement thermique final, ce qui élimine tout risque lié à l'utilisation de particules nanométriques.

Le procédé selon l'invention permet d'obtenir un matériau composite dense, à faible rugosité de surface, qui allie légèreté et bonnes propriétés thermomécaniques et qui présente des facilités de mise en forme (usinage en particulier) améliorées. Un tel matériau peut être utilisé dans l'aéronautique et dans l'automobile, par exemple pour la réalisation de pistons de moteurs à combustion.

D'autres caractéristiques et avantages de l'invention apparaîtront à la lecture du complément de description qui suit et qui se rapporte à un mode de réalisation particulier d'un matériau nanocomposite Al/TiC selon le procédé objet de l'invention.

Bien entendu, ce complément de description n'est donné qu'à titre d'illustration de l'invention et n'en constitue en aucun cas une limitation.

### BRÈVE DESCRIPTION DES DESSINS

La figure 1 représente un diagramme des phases du système titane-aluminium, trouvé dans le document **[5].**
Les figures 2a et 2b représentent les diagrammes de diffraction des rayons X des poudres d'Al3Ti et de C broyées à 80°C sous argon pendant des durées de broyage de 24 heures (figure 2a) et de 48 heures (figure 2b).
La figure 3 représente les diagrammes de diffraction des rayons X réalisés sur des pastilles de poudre broyée 36 heures, ayant subi un frittage à une température de 900°C, de 950°C et de 1000°C.
La figure 4 représente les diagrammes de diffraction des rayons X réalisés sur des pastilles de poudre broyée 36 heures, ayant subi un frittage à une température de 1000°C pendant 15 minutes sous argon avec une vitesse de chauffage (c'est-à-dire une vitesse de montée en température) de 10°C/min, de 100°C/min et de 300°C/min.
Les figures 5a, 5b et 5c sont des images obtenues à l'aide d'un détecteur d'électrons rétrodiffusé (BSE) des matériaux frittés obtenus après un recuit à 1000°C à 300°C/min pendant 1 minute (figure 5a), pendant 5 minutes (figure 5b) et pendant 15 minutes (figure 5c).

### EXPOSÉ DÉTAILLÉ DE MODES DE RÉALISATION PARTICULIERS

Afin d'illustrer le procédé objet de l'invention, nous allons décrire en détails les étapes à suivre pour la réalisation d'un matériau nanocomposite Al/TiC.

Selon l'invention, le matériau nanocomposite est obtenu selon la réaction suivante :

Al₃Ti₍ₛ₎+ C₍ₛ₎ → TiC₍ₛ₎+ 3 Al₍ₗ₎

Cette réaction correspond à la réaction (5) telle que mentionnée par Nukami et Flemings dans le document **[1].** La réaction (4) telle que mentionnée dans ce document permet elle aussi, en théorie, de parvenir à un composite Al/TiC.

Les calculs thermodynamiques montrent que la réaction (4) se fait facilement dès 777°C (1050K), alors que la réaction (5) est possible quelle que soit la température.

Il ressort donc que le composite Al/TiC peut être élaboré de différentes façons selon différents chemins réactionnels. Il ressort également que la réaction (5) pourrait tout à fait être réalisable par broyage à haute énergie.

Cependant, bien que le broyage puisse conduire à la formation quasi complète d'un composite Al/TiC selon la réaction (5), le broyage est utilisé, dans le cadre de la présente invention, pour mélanger à l'échelle la plus fine possible les différents constituants et minimiser la contamination par les outils de broyage. La réaction (5) ne débute vraiment qu'au cours du traitement thermique de frittage réactif et conduit à la formation du composite Al/TiC. Comme les phases Al₃Ti et C ont été dispersées de manière homogène au cours du broyage, le frittage réactif permet d'obtenir un nanocomposite Al/TiC présentant des renforts de TiC de tailles nanométriques.

Pour réaliser le broyage sous haute énergie dans le cadre de la présente invention, nous utilisons un broyeur à haute énergie de type attriteur. Il s'agit en l'occurrence du Simoloyer^{®} CM01, fourni par le constructeur Zoz GmbH. Ce broyeur possède un axe de rotation horizontal, une chambre de broyage d'une contenance de 0,5 L permettant de produire entre 15 et 50 g de poudre avec 1000 à 2000 g de billes (billes 100C6). Dans ce broyeur, il est possible de varier les vitesses et les durées de rotation afin de limiter l'agglomération des poudres au cours du broyage. Enfin, différents équipements permettent d'effectuer le broyage sous atmosphère contrôlée (vide primaire ou gaz).

### Conditions de broyage

Afin de déterminer les meilleures conditions de broyage permettant d'engendrer le mélange le plus intime possible d'Al₃Ti et de C et de minimiser la pollution par les outils de broyage, un plan d'expérience factoriel a été mis en place en faisant intervenir cinq paramètres du broyeur.

Deux des cinq paramètres font intervenir la quantité de poudre introduite dans le broyeur. Il s'agit du taux de remplissage de la chambre de broyage (enceinte) et du rapport entre les volumes de poudre et de billes introduites.

Deux autres paramètres sont liés au cycle de broyage : les durées des paliers aux deux vitesses différentes auxquelles tourne le rotor lors du broyage, une première vitesse pendant la phase de broyage et une deuxième vitesse, inférieure à la première vitesse, pendant la phase de désagglomération. Ces vitesses sont choisies arbitrairement égales à 1200 et 800 tr.min⁻¹.

Enfin, le dernier paramètre variant au cours des différents essais est la température de broyage.

Le plan d'expérience factoriel consiste à réaliser toutes les combinaisons possibles entre les différents facteurs considérés.

Dans le cas présent, nous avons cinq facteurs à deux niveaux, puisque chaque paramètre peut prendre deux valeurs ; il faut donc réaliser 2⁵, soit 32 essais.

Le plan d'expérience permet ainsi de mesurer les effets de tous les facteurs ainsi que la prise en compte des interactions entre ces facteurs.

A partir de ce plan factoriel à cinq facteurs à deux niveaux, un plan fractionnaire a été déterminé en ne gardant que les essais pour lesquels l'interaction d'ordre cinq, c'est à dire entre les 5 paramètres, est au niveau un. Ce plan réduit le nombre d'essais à 16.

Les valeurs des niveaux de chacun des facteurs ont été définies comme suit :

### ✔ Le taux de remplissage de l'enceinte

Les deux valeurs que nous avons choisi de tester sont 15 et 25%. La valeur la plus basse correspond au taux de remplissage recommandé par le constructeur du broyeur lors de broyages effectués dans un broyeur similaire muni d'une enceinte de 2 litres.

### ✔ Le rapport des volumes de poudre et de billes : V_{P}/V_{B}

Les deux valeurs que nous avons choisi de tester correspondent à un volume de poudre utilisé de 5 et 12 % du volume de billes utilisé.

Tout comme pour le taux de remplissage, la valeur recommandée par le constructeur (5%) sert de référence.

### ✔ Les durées des vitesses de rotation (paliers)

Le broyage est réalisé selon n cycles, chaque cycle comprenant une phase de broyage, réalisée à une première vitesse, et une phase de désagglomération, réalisée à une autre vitesse, moins rapide que la première vitesse.

Les durées de chaque phase des n cycles ont été définies arbitrairement égales à deux ou quatre minutes pour la vitesse haute et trente secondes ou deux minutes pour la vitesse basse, qui est censée servir principalement à « casser » le cycle de broyage (fracturation, soudage) et ainsi favoriser la désagglomération des particules.

### ✔ La température de broyage

La température de broyage n'est pas, à proprement parler, le paramètre considéré puisque le broyeur n'est pas équipé d'un quelconque système de régulation. Cependant, il est muni d'un système de refroidissement de l'enceinte par circulation d'eau entre les deux parois de l'enceinte. Grâce à la circulation d'eau, la température s'équilibre à environ 25°C. La mise en place d'un ruban chauffant piloté par un dispositif de régulation de la température, par exemple un dispositif du type Eurotherm, permet de chauffer l'enceinte jusqu'à 80°C. On choisit donc de tester le broyage à 25°C et à 80°C.

Les résultats obtenus mettent en évidence le rôle prépondérant du rapport V_{P}/V_{B} et du taux de remplissage. Ainsi, à la lumière des résultats obtenus, il semble qu'il soit préférable d'utiliser un rapport V_{P}/V_{B} élevé (12% plutôt que 5%) pour éviter une forte contamination et d'utiliser un taux de remplissage élevé (25% plutôt que 15%) pour favoriser l'avancement de la réaction.

Ces deux facteurs fixés, il semble préférable, pour limiter la contamination, de ne pas refroidir l'enceinte (80°C plutôt que 25°C) et d'utiliser un cycle de broyage constitué de paliers courts (la première vitesse à 800 tr.min⁻¹ ayant un palier de 2 min et la deuxième vitesse 1200 tr.min⁻¹ ayant un palier de 30s. En fait, les paliers servent à l'amélioration du rendement de la réaction et, dans une moindre mesure, à favoriser l'avancement de la réaction.

L'interprétation des résultats des seize broyages réalisés a permis de définir, parmi les valeurs choisies, quelles sont les valeurs qui permettent d'obtenir les conditions optimales de broyage pour favoriser le mélange et limiter la contamination. Il est toutefois fort probable que de meilleures conditions de broyages pourraient être définies en utilisant d'autres valeurs de niveau que celles utilisées pour le plan d'expérience.

En utilisant ces conditions optimales de broyage, on obtient à l'issue du broyage une poudre constituée d'environ 2,7 atomes d'aluminium pour un atome de titane, ce qui correspond à la moyenne obtenue pour les seize broyages.

### • Préparation du mélange

Le carbone existe sous trois formes allotropiques : le graphite, le fullerène et le carbone diamant. Dans le cadre de la présente invention, nous utilisons le graphite comme source de carbone pour la synthèse du TiC. Nous exploitons ainsi la propriété de lubrifiant solide du graphite, due à sa structure en feuillets, pour limiter le collage de la poudre métallique aux parois de l'enceinte lors du broyage.

Afin d'éviter une contamination en oxygène, il est préférable de faire subir à la poudre de graphite un traitement thermique de dégazage à haute température avant de l'introduire dans l'enceinte de broyage.

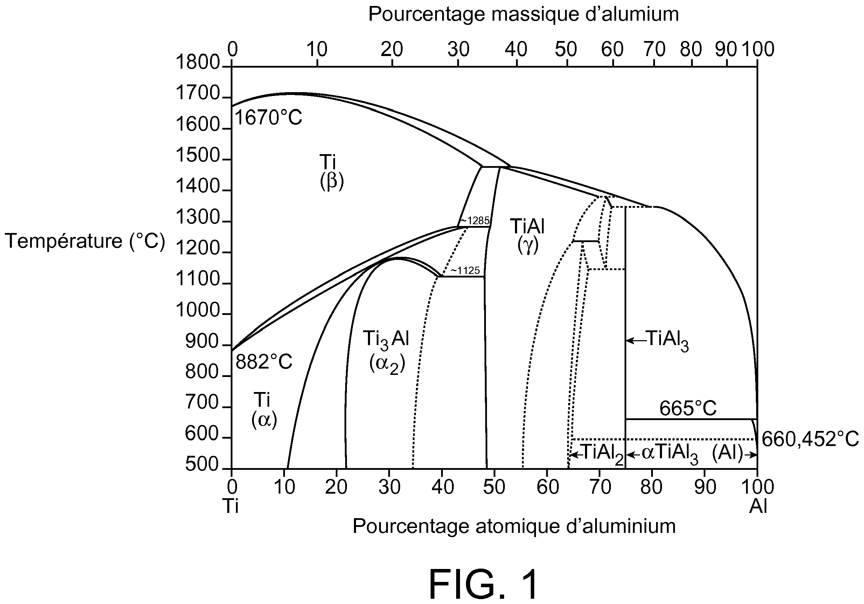

En ce qui concerne Al₃Ti, le choix de cet intermétallique est justifié par son caractère fragile, qui lui permet d'être plus facilement mélangé avec le graphite au cours du broyage et de minimiser la contamination. Le choix d'Al₃Ti est par ailleurs justifié par le fait que cet intermétallique est, comme on peut le constater sur le diagramme d'équilibre Al-Ti (figure 1), le composé intermétallique le plus riche en aluminium.

Le composé Al₃Ti peut cristalliser sous trois phases cristallographiques : D0₂₂, D0₂₃ et L1₂.

Des calculs de structure électronique prédisent une plus grande stabilité à la phase D0₂₃, suivie de la phase D0₂₂ et de la phase L1₂. Néanmoins, cette stabilité dépend très fortement de l'environnement atomique, des effets de relaxation et du mode de germination. De fait, expérimentalement, c'est principalement la phase D0₂₂ que l'on trouve le plus fréquemment. C'est ainsi que, pour former la poudre d'Al₃Ti qui est utilisée comme poudre de départ dans le procédé selon l'invention, on utilise des lingots d'Al₃Ti qui ne contiennent que (ou en très grande majorité) la phase D0₂₂.

Dans notre exemple de réalisation, nous utilisons une poudre de graphite de taille micrométrique (taille de 100 µm) fournie par Mersen (anciennement Carbone Lorraine) qui est préalablement dégazée sous vide secondaire à 1000°C pendant 12h et une poudre d'Al₃Ti obtenue en concassant des lingots d'Al₃Ti D0₂₂ de façon à obtenir des pépites de tailles inférieures à 800 µm.

Ces deux poudres sont ensuite pesées en proportions stoechiométriques pour obtenir un mélange conduisant à la réaction suivante après frittage :

Al₃Ti + C → 3Al + TiC

### • Broyage

Comme nous l'avons vu précédemment, il est préférable d'utiliser un rapport V_{P}/V_{B} égal à 12%, plutôt qu'un rapport égal à 5%, et un taux de remplissage de 25% plutôt que 15%.

L'enceinte du broyeur que nous utilisons présentant un volume de 0,5L, la masse de poudres introduites dans la chambre de broyage est donc de 63g, tandis que la masse de billes est de 1261,7g.

La température de l'enceinte est maintenue à 80°C pendant toute la durée du broyage.

Les autres paramètres de broyage sont les suivants. Le rotor du broyeur effectue n cycles de chacun :
- 900 tours/min pendant 2 min 30 s (phase de broyage) ;
- 600 tours/min pendant 30 s (phase de désagglomération).

La mécanosynthèse ou broyage à haute énergie doit être réalisée pendant un temps suffisant pour obtenir une poudre intimement mélangée présentant une phase Al₃Ti et une phase C. Le temps nécessaire au broyage est de plusieurs heures.

Dans cet exemple de réalisation, nous avons effectué deux broyages sous argon dans les conditions de broyage spécifiées ci-dessus pendant deux durées de broyage différentes : un premier broyage pendant 24 heures et un deuxième broyage pendant 48 heures.

A l'issue du temps de broyage, la composition de ces deux poudres a été analysée par la technique de la diffraction des rayons X (technique de diffractométrie des rayons X ou DRX, cette technique nous permettant de déterminer la nature des phases cristallisées).

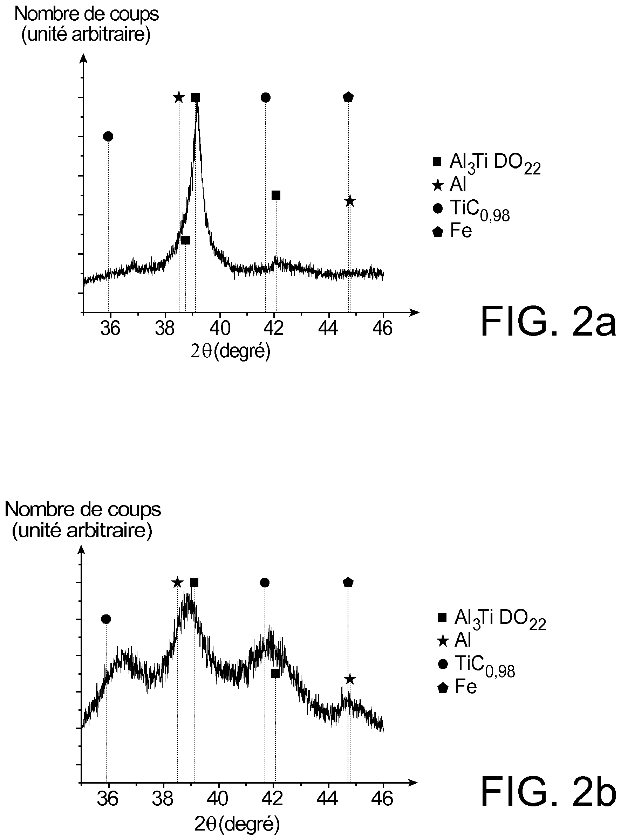

En étudiant le diagramme DRX obtenu avec cette poudre broyée (figure 2a), cette durée de broyage semble, à première vue, répondre à nos attentes. En effet, on constate, d'une part, que la réaction de synthèse du TiC est peu avancée et, d'autre part, que la contamination en fer reste faible : en procédant à une analyse à la microsonde de la poudre broyée, on apprend que la teneur en fer de la poudre est de 0,07 %. En outre, le rendement du broyage est bon : 75 %. Cependant, les différents frittages réalisés par la suite montrent que le matériau obtenu est peu homogène.

Quant au broyage de 48 heures (figure 2b), il est assez réactif: la quantité importante de TiC formée au cours du broyage favorise la contamination en fer du matériau final : 0,36 % (microsonde). De plus, une fraction importante de la poudre (30 %) est restée collée sur les parois de l'enceinte de broyage. Après frittage, les résultats d'analyse de composition obtenus à la microsonde montrent que le matériau fritté obtenu à partir de la poudre broyée pendant 48 heures présente une bien meilleure homogénéité que le matériau fritté obtenu avec la poudre broyée pendant 24 heures.

Il est à noter que dans les figures 2a et 2b, les pics de diffraction attribués au TiC sont fortement décalés par rapport aux valeurs théoriques de TiC_{0,98}. Ce décalage semble être la signature d'un oxycarbure de titane Ti(CO) dont la structure cristalline est identique à celle du TiC. Sa stabilité n'est pas grande, ce qui explique pourquoi il disparaît au cours du traitement de frittage ultérieur.

Au vu des résultats obtenus, on choisit de réaliser un broyage pendant 36 heures, qui semble être le meilleur compromis pour obtenir une poudre peu contaminée par les matériaux du broyeur (notamment le fer) et un matériau fritté homogène.

### • Tamisage

La poudre broyée pendant 36 heures est de préférence tamisée afin de sélectionner la poudre ayant une granulométrie entre 50 et 200 µm.

### • Compactage

La poudre broyée pendant 36 heures, éventuellement tamisée, est ensuite compactée sous forme de pastilles. On peut par exemple procéder à un compactage uniaxial simple effet (2 GPa) ou à une compression isostatique à froid (CIF) de la poudre broyée, qui est préalablement dégazée. Ce dégazage permet d'éviter la formation de porosités lors du compactage.

On obtient ainsi des pastilles de 8 mm de diamètre ayant une densité relative d'environ 80%.

### • Frittage réactif

### Détermination de la température de frittage

La température de frittage doit permettre à la fois la formation complète du carbure de titane et la densification d'Al/TiC.

Dans la littérature, cette température de frittage est comprise entre les 2/3 et les % de la température de fusion du composé majoritaire dans un mélange. Dans le cas présent, cette température de fusion est de 1370°C environ. Trois températures de frittage ont donc été testées à l'aide d'un dilatomètre sur les pastilles de la poudre broyée 36 heures : 900°C, 950°C et 1000°C.

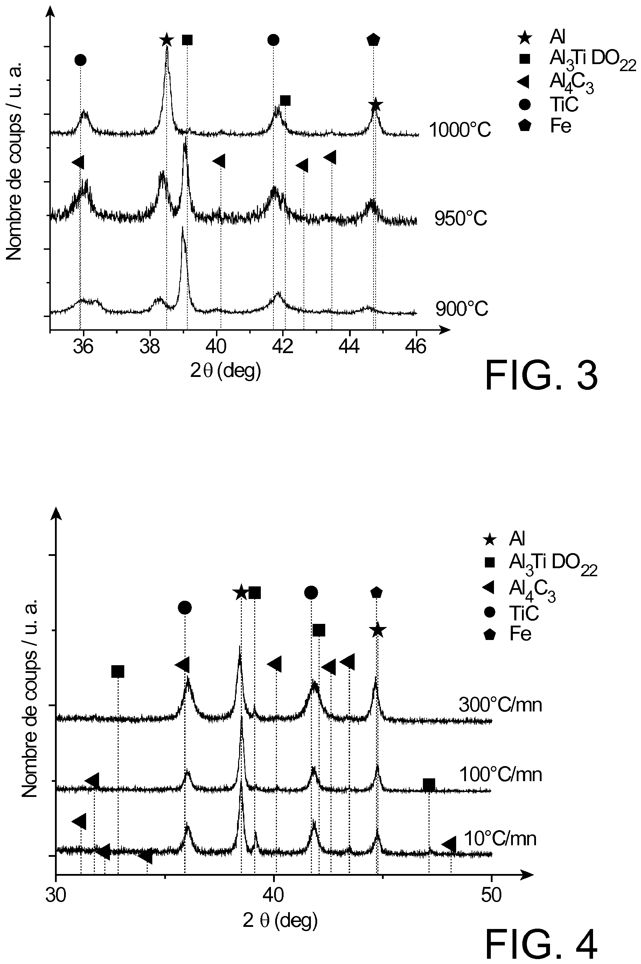

Pour ces tests, la vitesse de chauffage est de 100°C/min et l'échantillon est maintenu 15 minutes en palier, puis refroidi à 100°C/min. On utilise ensuite la diffractométrie par rayons X (DRX) afin d'analyser les phases présentes dans le matériau fritté (figure 3).

A 900°C, on constate que la réaction n'est pas complète : la phase D0₂₂ est majoritaire et les raies de TiC se dessinent.

A 950°C, c'est l'aluminium qui est majoritaire et la phase oxy-carbure (Ti-O-C) a quasiment disparu au profit du carbure de titane.

Enfin, à 1000°C, la réaction semble totale. On relève la trace de la phase D0₂₂.

Parmi ces trois températures de frittage, la température à 1000°C semble préférable.

### Détermination de la vitesse de montée en température

Le comportement de la poudre broyée et compactée sera différent selon la vitesse de chauffage utilisée et révèle différents phénomènes qui ne sont pas sans conséquence sur la microstructure finale du matériau fritté.

Outre la formation du carbure TiC autour de 900°C, le grossissement important des grains de la phase D0₂₃ vers 400°C est également un événement majeur qu'il faut prendre en compte puisqu'il se traduit par une perte de la nanostructure de la poudre et implique une réactivité ultérieure limitée de l'aluminure avec le graphite.

Par ailleurs, il est établi qu'autour de 800°C le carbure de titane présent se décompose au contact de l'aluminium liquide pour former du carbure d'aluminium (Al₄C₃) et la phase D0₂₂ (document **[6]**).

Ces deux événements, s'ils prennent de l'ampleur, risquent donc d'empêcher la réaction totale entre Al₃Ti et C.

Nous avons donc testé trois cycles de frittage de 15 minutes à 1000°C avec trois vitesses de chauffage distinctes, à savoir 10°C/min, 100°C/min et 300°C/min, et nous avons observé leurs effets sur l'avancement de la réaction, la taille des particules de TiC et la répartition des phases.

### ✔ Taille des particules

L'estimation de la taille des particules d'aluminium et de carbure de titane à partir des diagrammes de rayons X (formule de Scherrer) permet de rendre compte de l'effet de la vitesse de chauffage sur la taille des particules.

Les résultats sont présentés dans le Tableau ci-dessous, qui présente la taille des cristallites d'Al et de TiC en fonction de la vitesse de montée en température.

En analysant ces résultats, il ressort que, parmi les vitesses de chauffage testées, plus la vitesse de chauffage est élevée, plus la taille des cristallites est petite. Ces résultats sont en accord avec la théorie de la germination.

| Taille des cristallites | 10°C/min | 100°C/min | 300°C/min |
|---|---|---|---|
| Al | 36 nm | 34 nm | 25 nm |
| TiC | 25 nm | 22 nm | 13 nm |

### ✔ Avancement de la réaction

Les diagrammes de rayons X des échantillons chauffés à 10°C/min, à 100°C/min et à 300°C/min sont présentés dans la figure 4.

On constate que l'échantillon chauffé à 10°C/min renferme clairement une fraction importante de phase D0₂₂ et une quantité significative de carbure d'aluminium.

Pour des vitesses de chauffage supérieures, les résultats sont moins clairs : on n'observe pas de phases secondaires pour une vitesse de chauffage de 100°C/min, alors qu'une faible fraction de D0₂₂ est présente dans l'échantillon chauffé à 300°C/min.

Au vu des résultats, on préfère utiliser une vitesse de chauffage de 300°C/min, qui favorise la microstructure la plus fine.

### Détermination de la durée de palier

Si un échantillon de poudre broyée et compactée est maintenu à une température supérieure à la température de fusion de l'aluminium, il peut être le siège de réactions indésirables conduisant à la formation de phases secondaires, la nature de ces phases dépendant de la stoechiométrie du carbure de titane. Néanmoins, si les conditions thermodynamiques sont réunies pour permettre ces réactions, leur degré d'avancement est contrôlé par la cinétique. Nous allons donc essayer de déterminer la durée optimale de palier à 1000°C nécessaire pour former un nanocomposite Al/TiC et limiter la formation de ces phases secondaires.

Trois durées de palier ont été étudiées : 1min, 5min et 15min, la vitesse de chauffage étant de 300°C/min et la température du palier étant fixée à 1000°C.

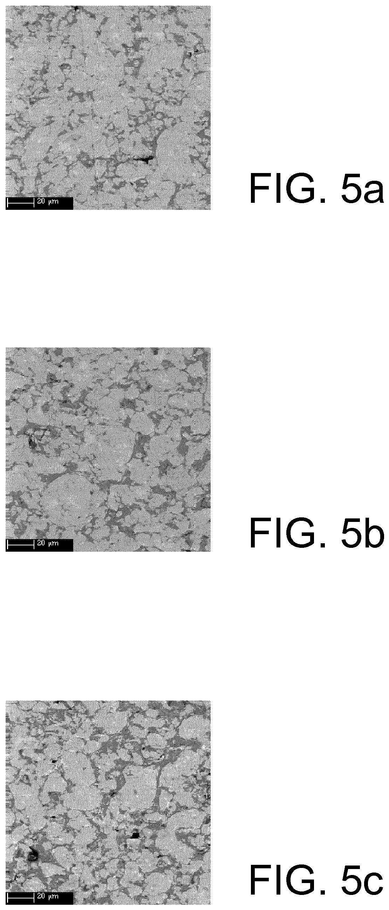

Les figures 5a à 5c montrent l'évolution de la microstructure au cours du temps de recuit.

Il s'avère que c'est pour 1 minute de palier que la microstructure est la plus homogène. En effet, pour un recuit très court, les zones Al/TiC riches en TiC sont plus nombreuses et l'ensemble est beaucoup plus homogène que pour des durées de palier plus longues.

### Conclusion sur les conditions optimales pour le frittage

Le traitement thermique « idéal » parmi les valeurs testées serait donc un recuit avec une vitesse de montée en température de 300°C/min, à 1000°C, pendant 1 minute.

Par cette méthode, on obtient un matériau comprenant des particules nanométriques de carbure de titane enrobées dans une matrice d'aluminium. La microstructure type est constituée majoritairement de domaines de tailles micrométriques d'aluminium riches en particules nanométriques de TiC, coexistant avec des domaines appauvris en TiC; tous ces domaines étant séparés par des filets d'aluminium pur. On obtient donc bien un matériau nanocomposite Al/TiC, homogène et très peu contaminé en fer.

La densité du matériau fritté est de 3,07, ce qui correspond à environ 91 % de la densité théorique.

### REFERENCES CITEES

**[1]** Nukami et Flemings « In Situ Synthesis of TiC Particulate-Reinforced Aluminium Matrix Composites », Metallurgical and Materials Transactions A, Volume 26A, pages 1877-1884, juillet (1995)
**[2]** Yucel Birol « Response to thermal exposure of the mechanically alloyed Al-Ti/C powders », Journal of materials science, Kluwer academic publishers, vol. 42, no. 13, avril (2007)
**[3]** B. Dikici et al. « Synthesis of in situ TiC nanoparticles in liquid aluminum : the effect of sintering temperature », Journal of composite materials, pages 895-900, janvier (2011)
**[4]** J.C. Viala et al. « Diffusion paths and reaction mechanisms in the high-temperature chemical interaction between carbon and titanium aluminides », Materials Science and Engineering A, pages 222-237, novembre (1995)
**[5]** Murray « Metallurgical and Materials Transactions », 19 (1988), page 243.
**[6]** Viala et al. « Diffusion Paths and Reaction Mechanisms in the High-Temperature Chemical Interaction Between Carbon and Titanium Aluminides », Mater. Sci. Eng. A, 203 (1995), pages 222-237.

## Revendications

1. Procédé de préparation d'un matériau nanocomposite Al/TiC comprenant une matrice en aluminium dans laquelle sont dispersées des particules comprenant du TiC et ayant une taille nanométrique, ledit procédé comprenant les étapes suivantes :
a) la préparation d'un premier mélange de poudres par mise en contact d'une poudre de graphite et d'une poudre d'aluminure de titane de formule Al₃Ti, les deux poudres ayant des particules de taille micrométrique ou supérieure ;
b) la préparation d'un deuxième mélange de poudres par mécano-synthèse du premier mélange de poudres, le deuxième mélange de poudres étant formé en tout ou partie de particules comprenant à la fois de l'aluminure de titane et du graphite ;
c) la compression du deuxième mélange de poudres pour obtenir un ou des comprimés ;
d) le frittage réactif du ou des comprimés, moyennant quoi on obtient le matériau nanocomposite Al/TiC.

2. Procédé selon la revendication 1, dans lequel la mécano-synthèse est réalisée pendant une durée comprise entre 24 et 48 heures, de préférence égale à 36 heures.

3. Procédé selon la revendication 1 ou la revendication 2, dans lequel la mécano-synthèse est réalisée dans une enceinte d'un dispositif de broyage, ladite enceinte n'étant pas refroidie au cours de la mécano-synthèse.

4. Procédé selon l'une quelconque des revendications 1 à 3, dans lequel la mécano-synthèse est réalisée dans une enceinte d'un dispositif de broyage, cette enceinte étant munie d'un rotor qui, au cours de la mécano-synthèse, effectue des cycles de broyage et désagglomération successifs, le rotor tournant, à chaque cycle, à une première vitesse durant une première durée au cours de la phase de broyage dudit cycle et à une deuxième vitesse durant une deuxième vitesse au cours de la phase de désagglomération dudit cycle, la première vitesse étant d'au moins de 200 tr/min plus rapide que la deuxième vitesse et la première durée étant au moins deux fois plus longue que la deuxième durée.

5. Procédé selon la revendication 4, dans lequel la première vitesse est comprise entre 1400 et 800 tr/min et la deuxième vitesse est comprise entre 1000 et 400 tr/min.

6. Procédé selon la revendication 4 ou la revendication 5, dans lequel la première durée est comprise entre 1 et 5 minutes et la deuxième durée est comprise entre 20 secondes et 3 minutes.

7. Procédé selon l'une quelconque des revendications 1 à 4, dans lequel la mécano-synthèse est réalisée dans une enceinte d'un dispositif de broyage, ladite enceinte étant remplie entre 15 et 30% de son volume.

8. Procédé selon la revendication 7, dans lequel l'enceinte comporte des billes de broyage et le rapport du volume du premier mélange de poudres sur le volume des billes de broyage est compris entre 5 et 12%.

9. Procédé selon l'une quelconque des revendications précédentes, dans lequel le deuxième mélange de poudres comprend au plus 35% en poids de TiC.

10. Procédé selon la revendication 1, dans lequel le frittage est réalisé à une température comprise entre 900°C et 1400°C.

11. Procédé selon la revendication 10, dans lequel le frittage est réalisé pendant une durée comprise entre 1 et 15 minutes.

12. Procédé selon la revendication 10 ou la revendication 11, dans lequel la température de frittage est atteinte en chauffant le ou les comprimés à une vitesse comprise entre 100°C/min et 400°C/min.

13. Procédé selon la revendication 1, dans lequel le frittage est réalisé à une température de 1000°C et pendant une durée comprise entre 1 et 5 minutes, la température de frittage étant atteinte en chauffant le ou les comprimées à une vitesse de 300°C/min.

14. Procédé selon la revendication 1, comprenant en outre, après l'étape b) et avant l'étape c), une étape de tamisage du deuxième mélange de poudres, pour sélectionner les particules ayant une taille comprise entre 50 et 200 micromètres.

## Patentansprüche

1. Verfahren zur Herstellung eines AI/TiC Nanokomposit-Materials, umfassend eine Matrix aus Aluminium, in der TiC-enthaltende Teilchen dispergiert sind, welche eine Größe im Nanobereich aufweisen, wobei das Verfahren die folgenden Schritte umfasst:
a) die Herstellung einer ersten Pulvermischung durch Inkontaktbringen eines Graphitpulvers und eines Titanaluminidpulvers der Formel Al₃Ti, wobei die zwei Pulver Partikel in Mikrometergröße oder größer aufweisen;
b) die Herstellung einer zweiten Pulvermischung durch Mechanosynthese der ersten Pulvermischung, wobei die zweite Pulvermischung vollständig oder teilweise gebildet wird aus Partikeln, welche gleichzeitig Titanaluminid und Graphit enthalten;
c) Kompression der beiden Pulvermischungen, um ein oder mehrere Presslinge zu erhalten;
d) Reaktionssintern des oder der Presslinge, wodurch man das AI/TiC Nanokomposit-Material erhält.

2. Verfahren nach Anspruch 1, worin die Mechanosynthese über einen Zeitraum von 24-48 Stunden, vorzugsweise 36 Stunden durchgeführt wird.

3. Verfahren nach Anspruch 1 oder 2, worin Mechanosynthese in einer Kammer einer Zerkleinerungsvorrichtung durchgeführt wird, wobei die Kammer während der Mechanosynthese nicht gekühlt wird.

4. Verfahren nach einem der Ansprüche 1 bis 3, worin die Mechanosynthese in einer Kammer einer Zerkleinerungsvorrichtung durchgeführt wird, wobei die Kammer mit einem Rotor ausgestattet ist, der während der mechanischen Synthese Zerkleinerungs- und Desagglomerationszyklen sukzessiv ausführt, wobei der Rotor in jedem Zyklus mit einer ersten Geschwindigkeit während einer ersten Dauer der Zerkleinerungsphase des genannten Zyklus, und bei einer zweiten Geschwindigkeit während einer zweiten Dauer der Phase der Desagglomeration des genannten Zyklus rotiert, wobei die erste Geschwindigkeit mindestens 200 Umdrehungen pro Minute schneller als die zweite Geschwindigkeit ist und die erste Dauer mindestens zweimal solange wie die zweite Dauer beträgt.

5. Verfahren nach Anspruch 4, worin die erste Geschwindigkeit zwischen 1400 und 800 Umdrehungen pro Minute und die zweite Geschwindigkeit zwischen 1000 und 400 Umdrehungen pro Minute beträgt.

6. Verfahren nach Anspruch 4 oder 5, worin die erste Dauer zwischen 1 und 5 Minuten und die zweite Dauer zwischen 20 Sekunden und 3 Minuten beträgt.

7. Verfahren nach einem der Ansprüche 1 bis 4, worin die Mechanosynthese in einer Kammer einer Zerkleinerungsvorrichtung durchgeführt wird, wobei die Kammer zu 15 bis 30% ihres Volumens gefüllt ist.

8. Verfahren nach Anspruch 7, worin die Kammer Mahlperlen enthält und das Verhältnis des Volumens der ersten Pulvermischung zum Volumen der Mahlperlen zwischen 5 und 12% beträgt.

9. Verfahren nach einem der vorhergehenden Ansprüche, worin die zweite Pulvermischung höchstens 35 Gew.% TiC umfasst.

10. Verfahren nach Anspruch 1, worin das Sintern bei einer Temperatur zwischen 900 und 1400°C erfolgt.

11. Verfahren nach Anspruch 10, worin das Sintern über einen Zeitraum von 1 bis 15 Minuten erfolgt.

12. Verfahren nach Anspruch 10 oder 11, worin die Sintertemperatur durch Aufheizen des oder der Presslinge mit einer Geschwindigkeit von 100°C/min bis 400°C/min eingestellt wird.

13. Verfahren nach Anspruch 1, worin das Sintern bei einer Temperatur von 1000°C und für eine Dauer von 1 bis 5 Minuten durchgeführt wird, wobei die Sintertemperatur eingestellt wird durch Aufheizen des oder der Presslinge mit einer Geschwindigkeit von 300°C/min.

14. Verfahren nach Anspruch 1, umfassend zudem nach Schritt b) und vor Schritt c), einen Siebschritt der zweiten Pulvermischung, um Partikel auszuwählen, welche eine Größe von 50 bis 200 Mikrometer aufweisen.

## Claims

1. A process for preparing a Al/TiC nanocomposite material comprising an aluminum matrix in which nano-sized particles comprising TiC are dispersed, said process comprising the following steps of:
a) preparing a first powder mixture by contacting a graphite powder with a titanium aluminide powder of the formula Al₃Ti, both powders having micro- or higher sized particles;
b) preparing a second powder mixture by mechanosynthesis of the first powder mixture, the second powder mixture being formed in all or part by particles comprising both titanium aluminide and graphite;
c) compressing the second powder mixture to obtain one or more greens;
d) reactively sintering the green(s), thereby the Al/TiC nanocomposite material is obtained.

2. The process according to claim 1, wherein the mechanosynthesis is carried out for a duration between 24 and 48 hours, preferably equal to 36 hours.

3. The process according to claim 1 or claim 2, wherein the mechanosynthesis is performed in an enclosure of a milling device, said enclosure being not cooled during the mechanosynthesis.

4. The process according to any of claims 1 to 3, wherein the mechanosynthesis is performed in an enclosure of a milling device, this enclosure being provided with a rotor which, during the mechanosynthesis, carries out successive milling and deagglomeration cycles, the rotor rotating, at each cycle, at a first speed during a first duration during the milling phase of said cycle and at a second speed during a second duration during the deagglomeration phase of said cycle, the first speed being at least 200 rpm higher than the second speed and the first duration being at least twice as long as the second duration.

5. The process according to claim 4, wherein the first speed is between 1,400 and 800 rpm and the second speed is between 1,000 and 400 rpm.

6. The process according to claim 4 or claim 5, wherein the first duration is between 1 and 5 minutes and the second duration is between 20 seconds and 3 minutes.

7. The process according to any of claims 1 to 4, wherein the mechanosynthesis is performed in an enclosure of a milling device, said enclosure being filled to between 15 and 30 % of its volume.

8. The process according to claim 7, wherein the enclosure includes milling balls and the ratio of the volume of the first powder mixture to the volume of the milling balls is between 5 and 12 %.

9. The method according to any of the preceding claims, wherein the second powder mixture comprises at most 35 weight % of TiC.

10. The process according to claim 1, wherein the sintering is performed at a temperature between 900°C and 1,400°C.

11. The process according to claim 10, wherein the sintering is performed for a duration between 1 and 15 minutes.

12. The process according to claim 10 or claim 11, wherein the sintering temperature is reached by heating the green(s) at a rate between 100°C/min and 400°C/min.

13. The process according to claim 1, wherein the sintering is performed at a temperature of 1,000°C and for a duration between 1 and 5 minutes, the sintering temperature being reached by heating the green(s) at a rate of 300°C/min.

14. The process according to claim 1, further comprising, after step b) and before step c), a step of sieving the second powder mixture, to select the particles having a size between 50 and 200 micrometers.
